# EUROPEAN PATENT APPLICATION

(11) **EP 4 852 077 A1**
(43) Date of publication of application: **09.12.2026**
(21) Application number: 26182283.7
(22) Date of filing: 01.06.2026
(51) Int. Cl.: H01M 4/133, H01M 10/0525, H01M 4/134, H01M 4/36, H01M 4/587, H01M 4/38

(54) **NEGATIVE ELECTRODE ACTIVE MATERIAL, NEGATIVE ELECTRODE, AND RECHARGEABLE LITHIUM BATTERY**

(30) Priority: 02.06.2025 KR 20250072121
(71) Applicant: SAMSUNG SDI CO., LTD., Yongin-si, Gyeonggi-do 17084 (KR)
(72) Inventor: LEE, Ban Seok, 16678 Suwon-si, Gyeonggi-do (KR)
(74) Representative: Michalski Hüttermann & Partner mbB

(57) **Abstract**

A negative electrode active material for a rechargeable lithium battery according to some embodiments of the present disclosure may include a silicon-carbon composite and graphite on a surface of the silicon-carbon composite. The silicon-carbon composite may include silicon nanoparticles and amorphous carbon. An amount of the graphite in the negative electrode active material may be from about 0.1 wt% to about 10 wt%. A specific surface area of the negative electrode active material may be about 10 m²/g or less.

## Description

### BACKGROUND

### 1. Field

The present disclosure relates to a negative electrode active material for a rechargeable lithium battery, a negative electrode for a rechargeable lithium battery having the negative electrode active material, and a rechargeable lithium battery including the negative electrode having the negative electrode active material.

### 2. Discussion of Related Art

With increasing presence of electronic devices using batteries (such as, e.g., mobile phones, notebook computers, or electric vehicles), a demand for secondary batteries having high energy density and high capacity is increasing. Therefore, improving a performance of rechargeable lithium batteries may be advantageous.

A rechargeable lithium battery typically includes a positive electrode and a negative electrode that contain an active material capable of the intercalation and deintercalation of lithium ions and produce electrical energy by oxidation and reduction reactions when the lithium ions are intercalated into and deintercalated from the positive electrode and the negative electrode.

### SUMMARY

The present disclosure is directed to providing a negative electrode active material for a rechargeable lithium battery, which has less volume expansion during charging and discharging of a battery and/or which improves a capacity and lifespan of the battery.

A negative electrode active material for a rechargeable lithium battery according to some embodiments of the present disclosure may include a silicon-carbon composite and graphite on a surface of the silicon-carbon composite. The silicon-carbon composite may include silicon nanoparticles and amorphous carbon. An amount of the graphite in the negative electrode active material may be from ≥ 0.1 wt% to ≤ 10 wt%. A specific surface area of the negative electrode active material may be about 10 m²/g or less.

In some embodiments, the graphite surrounds the silicon-carbon composite.

In some embodiments, the negative electrode active material may further include a core consisting of the silicon-carbon composite and a shell that surrounds the core and contains the graphite.

In some embodiments, the graphite may be contained from ≥ 0.1 parts by weight to ≤ 20 parts by weight with respect to 100 parts by weight of the silicon nanoparticles.

In some embodiments, the graphite may be chemically bound to the silicon-carbon composite.

In some embodiments, the graphite may have an average particle size D50 of ≤ 5 µm or less.

In some embodiments, the graphite may include natural graphite or artificial graphite.

In some embodiments, an amorphous carbon may be present on the surface of the silicon-carbon composite.

In some embodiments, the silicon nanoparticles may be spherical or flaky.

In some embodiments, the silicon nanoparticles may have an average particle size D50 from ≥ 50 nm to ≤ 150 nm.

In some embodiments, the negative electrode active material may include the silicon nanoparticles in an amount from ≥ 20 wt% to ≤ 70 wt% of a total weight of the negative electrode active material. The negative electrode active material may include the amorphous carbon from ≥ 20 wt% to ≤ 70 wt% of a total weight of the negative electrode active material.

In some embodiments, the silicon nanoparticles may be primary particles. The negative electrode active material contains secondary particles in which the silicon nanoparticles may be assembled.

In some embodiments, the amorphous carbon surrounds the secondary particles or completely fills an inter-particle spacing between the primary particles.

In some embodiments, the negative electrode active material may have an average particle size D50 of ≤ 15 µm or less.

In some embodiments, the negative electrode active material may have a sphericity of ≥ 0.8 or more.

A negative electrode according to some embodiments of the present disclosure may include the negative electrode active material as described above.

A rechargeable lithium battery according to some embodiments of the present disclosure may include a negative electrode including the negative electrode active material as described above and a positive electrode.

The present disclosure is also directed to providing a rechargeable lithium battery and a negative electrode for the rechargeable lithium battery, which include the negative electrode active material.

The negative electrode active material for a rechargeable lithium battery according to some embodiments may have less volume expansion during charging and discharging of a battery and may have low resistance, thereby increasing the capacity, efficiency and lifespan of a rechargeable lithium battery.

### BRIEF DESCRIPTION OF THE DRAWINGS

The above-described embodiments and other objects, features, and advantages of the present disclosure will become more apparent to those of ordinary skill in the art from exemplary embodiments described below with reference to the accompanying drawings.
FIG. 1 is a cross-sectional view schematically illustrating a rechargeable lithium battery having a cylindrical geometry according to some embodiments of the present disclosure.
FIG. 2 is a cross-sectional view schematically illustrating a rechargeable lithium battery having a prismatic geometry according to some embodiments of the present disclosure.
FIGS. 3 and 4 are each a cross-sectional view schematically illustrating a rechargeable lithium battery having a pouch-type geometry according to some embodiments of the present disclosure.

### DETAILED DESCRIPTION

Hereinafter, embodiments of the present disclosure are described in detail. However, the embodiments described below are exemplary, and the present disclosure is not limited thereto.

Unless otherwise specified herein, when a part such as a layer, a film, a region, or a plate is described as being "on" another part, this includes not only when a first part is "directly on" a second part but also when the first part is on the second part even if there is a third part that is between the first part and the second part.

Unless particularly stated otherwise, what is expressed in the singular may also include the plural. Additionally, unless otherwise specified, "A or B" may mean "including A, including B, or including A and B."

In the specification, "combination thereof" may mean a mixture, laminate, composite, copolymer, alloy, blend, and reaction product of components.

In the specification, "particle size D₅₀" refers to an average particle size indicating the size of particles with a cumulative volume of 50 vol% in the particle size distribution. Particle size distribution may be measured by a method widely known to those of ordinary skill in the art. The particle size distribution may be measured using a particle size analyzer, or by transmission electron microscopy or scanning electron microscopy. As another method, by using a measuring device that uses dynamic light-scattering, particle size may be measured using dynamic light-scattering, the number of particles may be counted for each particle size range through data analysis, and the D₅₀ value may be obtained by being calculated from the above-described method. Alternatively, the number of particles may be measured using a laser diffraction method. When measuring by laser diffraction, for example, particles to be measured may be dispersed in a dispersion medium, irradiated with approximately 28 kHz ultrasonic waves at an output of 60 W by introducing the dispersion medium into a commercially available laser diffraction particle size measuring device (e.g., Microtrac MT 3000), and D₅₀ may be calculated based on 50% of the particle size distribution using the measuring device.

The particle size may be measured using a particle size analyzer (Beckman Coulter, LS 13 320 XR), but the present disclosure is not limited thereto.

If (or when) the above-described particle is substantially spherical, the above size may refer to a diameter of the above-described particle.

As used herein, the term "primary particle" refers to a particle of a given material that has not undergone agglomeration. The primary particle is typically the smallest individual unit particle in a dispersed system, usually in the nanometer size range (1-1000 nm). Unless they have undergone agglomeration to form a secondary particle, primary particles are typically kept apart by electrostatic repulsion such as zeta potential.

As used herein, the term "secondary particle" refers an agglomerate of primary particles of a given material. A secondary particle is a composite particle formed when primary particles adhere to one another via, for example, van der Waals force, resulting in a size greater than the primary particle. A secondary particle can be broken down physically.

In some embodiments, a negative electrode active material for a rechargeable lithium battery, which includes silicon nanoparticles, is provided.

Silicon nanoparticles have a significantly greater capacity compared to a carbon-based negative electrode active material, but a battery may have large volume expansion during charging and discharging. To prevent volume expansion of the silicon nanoparticles and improve the capacity of a battery, a method of compositing silicon nanoparticles and amorphous carbon is used. However, this method has a limitation on preventing the volume expansion of the silicon nanoparticles.

In some embodiments, the negative electrode active material may include the silicon nanoparticles and the amorphous carbon and may significantly reduce volume expansion during charging and discharging of a battery, may reduce resistance, and may significantly improve the capacity, lifespan and efficiency of a battery.

In some embodiments, the negative electrode active material for a rechargeable lithium battery (hereinafter, referred to as a "negative electrode active material") includes a silicon-carbon composite including silicon nanoparticles and amorphous carbon, and graphite present on the surface of the silicon-carbon composite. The amount of the graphite in the negative electrode active material is from ≥ 0.1 wt% to ≤ 10 wt%, and the specific surface area of the negative electrode active material is ≤ 10 m²/g or less.

The amount of the graphite in the negative electrode active material is from ≥ 0.1 wt% to ≤ 10 wt%, and the specific surface area of the negative electrode active material is about 10 m²/g or less. When the graphite amount and the specific surface area are satisfied, the volume expansion of the negative electrode active material may significantly decrease, the resistance may be reduced, and a significant effect of improving battery capacity may be exhibited.

When the graphite amount in the negative electrode active material is less than about 0.1 wt%, the graphite amount is too low, it may be difficult to sufficiently inhibit the volume expansion of the silicon nanoparticles, and battery efficiency may decrease. When the graphite amount in the negative electrode active material is more than about 10 wt%, the amount of the silicon nanoparticles in the negative electrode active material may be relatively less, and, therefore, the improvement in battery capacity may be insignificant.

When the specific surface area of the negative electrode active material is more than 10 m²/g, an electrolyte is permeated into the negative electrode active material during charging and discharging of a battery, deteriorating the negative electrode active material, which can adversely affect electrochemical properties.

The graphite amount in the negative electrode active material may be achieved by adjusting the graphite amount in the process of preparing the negative electrode active material from a mixture of the silicon-carbon composite and the graphite.

The specific surface area of the negative electrode active material may be achieved by adjusting the specific surface area of the silicon-carbon composite and the graphite amount in the process of preparing the negative electrode active material from a mixture of the silicon-carbon composite and the graphite.

In some embodiments, the graphite amount in the negative electrode active material may be from ≥ 0.5 wt% to ≤ 10 wt%, for example, be about 0.1, 1, 1.5, 2, 2.5, 3, 3.5, 4, 4.5, 5, 5.5, 6, 6.5, 7, 7.5, 8, 8.5, 9, 9.5, 10 wt%, from ≥ 5 wt% to ≤ 10 wt%, from ≥ 6 wt% to ≤ 10 wt%, from ≥ 7 wt% to ≤ 10 wt%, from ≥ 8 wt% to ≤ 10 wt%, or from ≥ 9 wt% to ≤ 10 wt%. Within the above ranges, the effect of improving battery efficiency and inhibiting the volume expansion of the silicon-carbon composite may be significant.

In some embodiments, the specific surface area of the negative electrode active material may be about 0.1, 0.5, 1, 1.5, 2, 2.5, 3, 3.5, 4, 4.5, 5, 5.5, 6, 6.5, 7, 7.5, 8, 8.5, 9, 9.5, 10 m²/g, from ≥ 0.1 m²/g to ≤ 3.5 m²/g, for example, from ≥ 1 m²/g to ≤ 3.5 m²/g.

The graphite amount in the negative electrode active material may be measured by a conventional method known to those of ordinary skill in the art.

The specific surface area of the negative electrode active material is a BET specific surface area, and the BET specific surface area may be measured using a BET measurement instrument (e.g., ASAP 2460 (Micromeritics)), but the present disclosure is not limited thereto.

The graphite may surround the silicon-carbon composite. In some embodiments, the graphite may partially or completely surround the silicon-carbon composite. To this end, the negative electrode active material may further inhibit the volume expansion of the silicon nanoparticles.

In some embodiments, the negative electrode active material may have a core-shell structure, which has a core consisting of the silicon-carbon composite and a shell surrounding the core and containing the graphite. The core-shell structure may completely prevent contact between the silicon nanoparticles and an electrolyte, thereby inhibiting a side reaction caused by the electrolyte.

The graphite may be contained at 0.1 parts by weight to 20 parts by weight, for example, 0.1, 0.5, 1, 1.5, 2, 2.5, 3, 3.5, 4, 4.5, 5, 5.5, 6, 6.5, 7, 7.5, 8, 8.5, 9, 9.5, 10, 10.5, 11, 11.5, 12, 12.5, 13, 13.5, 14, 14.5, 15, 15.5, 16, 16.5, 17, 17.5, 18, 18.5, 19, 19.5, 20 parts by weight, 5 parts by weight to 20 parts by weight, or 5 parts by weight to 15 parts by weight with respect to 100 parts by weight of the silicon nanoparticles. Within the above ranges, the volume expansion of the silicon nanoparticles may be prevented, and the battery capacity may significantly increase.

The graphite may chemically bond to the silicon-carbon composite. "Chemically bind" may mean that, due to the high-pressure or high-speed collision of the two substances, van der Waals bonds, among others, exit between the graphite and the silicon-carbon composite. Therefore, the bond between the graphite and the silicon-carbon composite may increase.

The graphite may have an average particle size D₅₀ of ≤ 5 µm or less, for example, from ≥ 0.005 µm to ≤ 2 µm, from ≥ 0.01 µm to ≤ 2 µm, from ≥ 0.005 µm to ≤ 0.5 µm, from ≥ 0.005 µm to ≤ 0.05 µm, or from ≥ 0.01 µm to ≤ 0.5 µm. Within the above ranges, the graphite may be easily present on the surface of the silicon-carbon composite having a surface area as described below, and it may be easy to prepare the negative electrode active material.

The graphite may include one or more of natural graphite and artificial graphite.

When the negative electrode active material is the core-shell structure, the thickness of the shell containing graphite may be from ≥ 10 nm to ≤ 2,000 nm, for example, about 10, 20, 30, 40, 50, 60, 70, 80, 90, 100, 110, 120, 130, 140, 150, 160, 170, 180, 190, 200, 210, 220, 230, 240, 250, 260, 270, 280, 290, 300, 310, 320, 330, 340, 350, 360, 370, 380, 390, 400, 410, 420, 430, 440, 450, 460, 470, 480, 490, 500, 550, 600, 650, 700, 750, 800, 850, 900, 950, 1000, 1050, 1100, 1150, 1200, 1250, 1300, 1350, 1400, 1450, 1500, 1550, 1600, 1650, 1700, 1750, 1800 1850, 1900, 1950, 2000 nm, from ≥ 20 nm to ≤ 500 nm. Within the above ranges, an effect of inhibiting the volume expansion of the silicon nanoparticles may be provided, and it is possible to prevent an excessive increase in the average particle size of the negative electrode active material, thereby avoiding a decrease in electrode density.

The negative electrode active material may further include amorphous carbon present on the surface of the silicon-carbon composite.

The amorphous carbon may cause the graphite to be stably fixed on the surface of the silicon-carbon composite, thereby increasing the reliability of the negative electrode active material.

In some embodiments, the amorphous carbon may be present on at least a part of the surface of the silicon-carbon composite.

An amorphous carbon precursor for the amorphous carbon may be a polyimide resin, a furan resin, a phenol resin, a polyvinyl alcohol resin, a poly(meth)acrylic acid resin, a polyurethane resin, a cellulose resin, an epoxy resin, a polystyrene resin, petroleum pitch, coal tar pitch, green coke, mesophase pitch, a coal-based oil, petroleum heavy oil, coke, or a combination thereof.

The average particle size D₅₀ of the silicon nanoparticles may be from ≥ 50 nm to ≤ 150 nm, for example, about 50 nm or more, about 60 nm or more, about 70 nm or more, or about 80 nm or more, and about 150 nm or less, about 140 nm or less, about 130 nm or less, or about 120 nm or less. When the average particle size D₅₀ of the silicon nanoparticles falls within the above ranges, a side reaction with an electrolyte may be inhibited, and the expansion of the silicon nanoparticles is reduced, thereby improving initial efficiency and lifespan characteristics.

The silicon nanoparticles may be spherical or flaky, but the present disclosure is not limited thereto.

The silicon nanoparticles may be contained at from ≥ 20 wt% to ≤ 70 wt%, for example, about 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70 wt%, from ≥ 30 wt% to ≤ 70 wt%, from ≥ 30 wt% to ≤ 60 wt%, or from ≥ 40 wt% to ≤ 60 wt% of the total weight of the negative electrode active material. When the amount of the silicon nanoparticles falls within the above ranges, the battery capacity may increase.

The silicon nanoparticles are primary particles. The silicon nanoparticles may be assembled into secondary particles and included in the negative electrode active material. The negative electrode active material may include secondary particles in which the silicon nanoparticles are assembled.

In some embodiments, the secondary particles may be spherical.

The amorphous carbon may be soft carbon, hard carbon, mesophase pitch carbon, calcined coke, or a combination thereof.

In some embodiments, the amorphous carbon may surround the secondary particles or fill a space (e.g. an inter-particle spacing) between the primary particles.

The amorphous carbon may be contained at from ≥ 20 wt% to ≤ 70 wt%, for example, about 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 64, 65, 66, 67, 68, 69, 70 wt%, from ≥ 30 wt% to ≤ 70 wt%, from ≥ 30 wt% to ≤ 60 wt%, or from ≥ 30 wt% to ≤ 50 wt% of the total weight of the negative electrode active material. When the amount of the amorphous carbon falls within the above ranges, battery capacity may increase.

The average particle size D₅₀ of the negative electrode active material may be about 15 µm or less, for example, from ≥ 2 µm to ≤ 15 µm, from ≥ 3 µm to ≤ 13 µm, or from ≥ 5 µm to ≤ 10 µm. When the average particle size of the negative electrode active material falls with the above ranges, lithium ions may be easily dispersed into the negative electrode active material, and battery resistance and rate characteristics may be improved. In addition, an excessive increase in the specific surface area of the negative electrode active material may be inhibited, thereby reducing a side reaction with an electrolyte.

In some embodiments, the negative electrode active material includes a core consisting of a silicon-carbon composite, which includes a core containing silicon nanoparticles and amorphous carbon, and an amorphous carbon coating layer surrounding the core; and a shell including graphite surrounding the core. The graphite amount of the negative electrode active material is from ≥ 0.1 wt% to ≤ 10 wt%, and the specific surface area of the negative electrode active material is about 10 m²/g or less.

The negative electrode active material may have a sphericity of ≥ 0.8 or more, for example, from ≥ 0.9 to ≤ 1. The sphericity may be represented by Equation 1, below: [Equation 1] $Sphericity \left(S\right) = 4 π \times A / {B}^{2} .$

In Equation 1, A is the area of the negative electrode active material, and B is the perimeter of the negative electrode active material. In some embodiments, B may be a perimeter of an actual geometry of the negative electrode active material.

The sphericity of the negative electrode active material may be a value obtained when projecting a three-dimensional particle onto a two-dimensional plane. The sphericity may be the ratio of the perimeter of a real particle and the perimeter of the circle with the same area as the real one.

In Equation 1, the area A indicates the area of a circle with a circumference that is the same as the actual perimeter B of particles that has been obtained through a SEM image of an electrode cross-section using a controlled pressure scanning electron microscope (CP-SEM) and calculating an actual perimeter of the particle from the cross-sectional image through an Image J program. In some embodiments, the actual perimeter may refer not only to a perimeter when the particle has a perfectly spherical geometry, but also a length obtained along the perimeter even when the particle is not perfectly spherical and has uneven regions.

In some embodiments, the silicon nanoparticles may be primary particles. The silicon nanoparticles may be assembled into secondary particles and may be included in the negative electrode active material.

In the negative electrode active material, the inter-particle spacing between the silicon nanoparticles contained in the core may be about 100 nm or less, about 90 nm or less, about 80 nm or less, about 70 nm or less, about 65 nm or less, about 60 nm or less, about 55 nm or less, about 50 nm or less, about 45 nm or less, about 40 nm or less, or about 35 nm or less. Since the inter-particle spacing between the silicon nanoparticles falls within the above ranges, the size of pores included in the core and the total pore volume may be reduced. When the inter-particle spacing between the silicon nanoparticles falls within the above ranges, the volume of pores present inside the negative electrode active material may be reduced, and the inter-particle spacing between the silicon nanoparticles may be reduced, such that penetration of an electrolyte into the core during the operation of a battery may be prevented. As a result, a side reaction between the electrolyte and the negative electrode active material may be inhibited, thereby improving the lifespan of a battery.

The inter-particle spacing between the silicon nanoparticles refers to a center- to-center distance between the silicon nanoparticles.

The inter-particle spacing between the silicon nanoparticles may indicate that the inter-particle spacing from ≥ 50% to ≤ 100%, for example, from ≥ 60% to ≤ 100%, from ≥ 70% to ≤ 100%, or from ≥ 80% to ≤ 100% silicon nanoparticles of the total number of the silicon nanoparticles contained in the core falls within the above ranges.

The average particle size D₅₀ of the silicon nanoparticles may be from ≥ 50 nm to ≤ 150 nm, for example, about 50 nm or more, about 60 nm or more, about 70 nm or more, or about 80 nm or more, and about 150 nm or less, about 140 nm or less, about 130 nm or less, or about 120 nm or less. When the average particle size D₅₀ of the silicon nanoparticles falls within the above ranges, a side reaction with an electrolyte may be inhibited, and the expansion of the silicon nanoparticles is inhibited, thereby improving initial efficiency and lifespan characteristics of the rechargeable lithium battery.

The silicon nanoparticles may have a full width at half maximum (FWHM) of the X-ray diffraction angle (20) peak for the (111) plane, measured with CuKα radiation, in the range of 0.3° to 7°. Therefore, lifespan characteristics may be improved.

The FWHM of the X-ray diffraction angle (20) peak on the (111) plane, measured with CuKα radiation, of the silicon nanoparticles may be adjusted by adjusting the size of the silicon particles or changing a process of manufacturing silicon nanoparticles.

The amorphous carbon contained in the core may be soft carbon, hard carbon, mesophase pitch carbon, calcined coke, or a combination thereof.

When the amorphous carbon is contained in the core, a side reaction with an electrolyte may be inhibited by reducing the pore volume of the negative electrode active material. In addition, when the silicon nanoparticles in the negative electrode active material expand, such expansion may be buffered, thereby suppressing battery expansion. In addition, as the amorphous carbon serves as a binder, cracking of the negative electrode active material may be reduced to well maintain the geometry of the negative electrode active material.

The coating layer may include amorphous carbon, and the coating layer may have a thickness from ≥ 1 nm to ≤ 900 nm, for example, from ≥ 5 nm to 800 nm. Therefore, it is possible to reduce the specific surface area of the negative electrode active material and prevent an electrolyte from permeating into the negative electrode active material. As a result, the side reaction with an electrolyte may be minimized and lifespan characteristics may be improved for the rechargeable lithium battery.

The amorphous carbon contained in the coating layer may be soft carbon, hard carbon, mesophase pitch carbon, calcined coke, or a combination thereof and may be a compound that is the same as or different from the amorphous carbon contained in the core.

The average particle size D₅₀ of the negative electrode active material may be achieved by suitably adjusting disintegration and grinding conditions in the preparation of the negative electrode active material.

The negative electrode active material may have a total volume of pores with a size of ≤ 200 nm or less in the range of ≤ 3.0 x 10⁻² cm³/g or less, for example, about ≤ 2.5 x 10⁻² cm³/g or less, ≤ 2.3 x 10⁻² cm³/g or less, ≤ 2.0 x 10⁻² cm³/g or less, ≤ 1.9 x 10⁻² cm³/g or less, ≤ 1.8 x 10⁻² cm³/g or less, ≤ 1.7 x 10⁻² cm³/g or less, ≤ 1.6 x 10⁻² cm³/g or less, ≤ 1.5 x 10⁻² cm³/g or less, ≤ 1.4 x 10⁻² cm³/g or less, ≤ 1.3 x 10⁻² cm³/g or less, ≤ 1.2 x 10⁻² cm³/g or less, ≤ 1.1 x 10⁻² cm³/g or less, ≤ 1.0 x 10⁻² cm³/g or less, ≤ 0.9 x 10⁻² cm³/g or less, ≤ 0.8 x 10⁻² cm³/g or less, ≤ 0.7 x 10⁻² cm³/g or less, ≤ 0.6 x 10⁻² cm³/g or less, or ≤ 0.5 x 10⁻² cm³/g or less. When the total pore volume falls within the above ranges, a side reaction between an electrolyte and the silicon nanoparticles may be inhibited, thereby improving initial efficiency and lifespan characteristics.

The total volume of the pores with a size of ≤ 200 nm or less can be quantitatively measured using a Barrett-Joyner-Halenda (BJH) analysis instrument.

The pore size of the negative electrode active material may be ≤ 200 nm or less, for example, ≤ 170 nm or less, ≤ 150 nm or less, ≤ 130 nm or less, ≤ 100 nm or less, or ≤ 50 nm or less. When the pore size is controlled within the above ranges, the side reaction between the electrolyte and the silicon nanoparticles may be reduced, and a battery with improved initial efficiency and lifespan characteristics may be obtained.

The amount of the silicon nanoparticles and the amorphous carbon may have a weight ratio from about 80:20 to about 20:80, for example, from about 70:30 to about 30:70, from about 70:30 to about 40:60, or from about 70:30 to about 50:50 with respect to a total of 100 parts by weight of the silicon nanoparticles and the amorphous carbon in the negative electrode active material. When the amount of the silicon nanoparticles and the amorphous carbon fall within the above ranges, an inner pore volume may be reduced, and the amorphous carbon may be uniformly dispersed in and on the surface of the negative electrode active material. As a result, a side reaction with an electrolyte may be inhibited, and a performance of the negative electrode active material may be improved.

The method of preparing a negative electrode active material includes preparing a mixture by mixing and dispersing silicon nanoparticles and amorphous carbon; preparing a molded body by spraying, drying, and then pressing the mixture; thermally treating the molded body; and coating graphite on the surface of the thermally treated molded body.

A mixture is prepared by mixing and dispersing the silicon nanoparticles and the amorphous carbon.

A molded body is prepared by spraying, drying, and then pressing the prepared mixture.

The drying may be performed using a spray dryer from ≥ 50°C to ≤ 150°C.

The pressing may be performed under a pressure from ≥ 20 MPa to ≤ 150 MPa, for example, from ≥ 50 MPa to ≤ 150 MPa, from ≥ 75 MPa to ≤ 150 MPa, or from ≥ 75 MPa to ≤ 125 MPa. When the molded body is pressed in this pressure range, a distance between the silicon nanoparticles may be suitably maintained and a volume of pores formed in the negative electrode active material may be controlled, thereby inhibiting a side reaction between the electrolyte and the silicon nanoparticles and improving initial efficiency and lifespan characteristics.

The manufactured molded body is thermally treated.

The thermal treatment may be performed from ≥ 700°C to ≤ 1100°C, for example, from ≥ 800°C to ≤ 1050°C or from ≥ 900°C to ≤ 1000°C. When the thermal treatment is performed within the above temperature ranges, the amorphous carbon is carbonized, and an intensity of the negative electrode active material may be reinforced. In addition, a conductivity of the negative electrode active material may be improved, and an initial efficiency of a battery may be improved. The thermal treatment may be performed in a furnace in a nitrogen (N₂) atmosphere.

When the graphite size is sufficiently small, the graphite may be coated by applying impact to the thermally treated molded body using a hybridization system. When the graphite size is large, the thermally treated molded body is mixed with a binder pitch, and the binder pitch is temporarily coated onto the molded body and thermally treated at 1000°C for graphite coating.

### Negative electrode for rechargeable lithium battery

A negative electrode for a rechargeable lithium battery comprises a negative electrode active material layer comprising the negative electrode active material for a rechargeable lithium battery such as that which is described above.

The negative electrode active material layer may further comprise a negative electrode active material (i.e., a second negative electrode active material) that is different from the negative electrode active material for a rechargeable lithium battery (i.e., a first negative electrode active material).

The second negative electrode active material may include at least one of a material that reversibly intercalates/deintercalates lithium ions, a lithium metal, a lithium metal alloy, a material capable of doping/dedoping lithium, or a transition metal oxide.

The material that reversibly intercalates/deintercalates lithium ions may include a carbon-based negative electrode active material, such as, for example, crystalline carbon, amorphous carbon, or a combination thereof. The crystalline carbon may be graphite having an irregular, sheet, flake, sphere, or fiber geometry; may be natural graphite; or may be artificial graphite. The amorphous carbon may be or may include at least one of a soft carbon, a hard carbon, a mesophase pitch carbonization product, or calcined coke.

The lithium metal alloy includes an alloy of lithium and a metal or a metalloid such as or including at least one of Na, K, Rb, Cs, Fr, Be, Mg, Ca, Sr, Si, Sb, Pb, In, Zn, Ba, Ra, Ge, Al, and Sn.

The material capable of doping/dedoping lithium may be or may include a Si-based negative electrode active material or a Sn-based negative electrode active material. The Si-based negative electrode active material may include at least one of silicon, a silicon-carbon composite, SiOx (0 < x < 2), or a Si-Q alloy (where Q is or includes at least one of an alkali metal, an alkaline-earth metal, a Group 13 element, a Group 14 element [excluding Si], a Group 15 element, a Group 16 element, a transition metal, a rare earth element, and a combination thereof). The Sn-based negative electrode active material may include at least one of Sn, SnO₂, a Sn-based alloy, or a combination thereof.

The silicon-carbon composite may be or may include a composite of silicon and amorphous carbon. In some embodiments, the silicon-carbon composite may be in the form of silicon particles and amorphous carbon coated on the surface of the silicon particles. The silicon-carbon composite may include a secondary particle (core) in which primary silicon particles are assembled, and an amorphous carbon coating layer (shell) on the surface of the secondary particle. The amorphous carbon may also be between the primary silicon particles, and, in some embodiments, the primary silicon particles may be coated with the amorphous carbon. The secondary particle may be dispersed in an amorphous carbon matrix.

The silicon-carbon composite may further include crystalline carbon. The silicon-carbon composite may include a core including crystalline carbon and silicon particles, and an amorphous carbon coating layer on a surface of the core.

The Si-based negative electrode active material or the Sn-based negative electrode active material may be used in combination with a carbon-based negative electrode active material.

The binder may attach the negative electrode active material particles to each other and may also attach the negative electrode active material to the current collector. The binder may include a non-aqueous binder, an aqueous binder, a dry binder, or a combination thereof.

The non-aqueous binder may include at least one of polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be or may include at least one of a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, or a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include at least one of Na, K, or Li.

The dry binder may be or may include a polymer material that is capable of being fibrous. The dry binder may be or may include at least one of polytetrafluoroethylene, polyvinylidene fluoride, a polyvinylidene fluoride-hexafluoropropylene copolymer, polyethylene oxide, or a combination thereof.

The conductive material may impart conductivity (e.g., electrical conductivity) to the electrode. Any material that does not cause an undesirable chemical change in the rechargeable lithium battery and that conducts electrons can be used in the battery. Non-limiting examples of a conductive material may include a carbon-based material such as at least one of natural graphite, artificial graphite, carbon black, acetylene black, ketjen black, a carbon fiber, a carbon nanofiber, and a carbon nanotube; a metal-based material including at least one of copper, nickel, aluminum, or silver in a form of a metal powder or a metal fiber; a conductive polymer such as a polyphenylene derivative; or a mixture thereof.

The negative current collector may include at least one of a copper foil, a nickel foil, a stainless-steel foil, a titanium foil, a nickel foam, a copper foam, a polymer substrate coated with a conductive metal, or a combination thereof.

### Rechargeable lithium battery

Some embodiments provide a rechargeable lithium battery comprising the negative electrode for the rechargeable lithium battery.

The rechargeable lithium battery may comprise the negative electrode and positive electrode for the rechargeable lithium battery. The negative electrode is substantially the same as described above.

A positive electrode for a rechargeable lithium battery may include a current collector and a positive electrode active material layer on the current collector. The positive electrode active material layer may include a positive electrode active material and may further include a binder and/or a conductive material.

The positive electrode may further include an additive that can constitute a sacrificial positive electrode.

### Positive electrode active material

The positive electrode active material may include a compound (lithiated intercalation compound) that is capable of intercalating and deintercalating lithium. At least one of a composite oxide of lithium and a metal such as or including at least one of cobalt, manganese, nickel, or combinations thereof may be used.

The composite oxide may be or may include a lithium transition metal composite oxide. Examples of the composite oxide may include at least one of lithium nickel-based oxide, lithium cobalt-based oxide, lithium manganese-based oxide, lithium iron phosphate-based compound, cobalt-free nickel-manganese-based oxide, or a combination thereof.

The following compounds represented by any one of the following Chemical Formulas may be used for the composite oxide. LlₐA_{1-b}X_{b}O_{2-c}D_{c} (0.90≤a≤1.8, 0≤b≤0.5, and 0≤c≤0.05); LiₐMn_{2-b}X_{b}O_{4-c}D_{c}(0.90≤a≤1.8, 0≤b≤0.5,and 0≤c≤0.05); LiₐNi_{1-b-c}Co_{b}X_{c}O_{2-α}D_{α} (0.90≤a≤1.8, 0≤b≤0.5,0≤c≤0.5, and 0<α<2); LiₐNi_{1-b-c}Mn_{d}X_{c}O_{2-α}D_{α} (0.90≤a≤1.8, 0≤b≤0.5,0≤c≤0.5, and 0<α<2); LiₐNi_{b}Co_{c}L¹_{d}GₑO₂ (0.90≤a≤1.8, 0≤b≤0.9, 0≤c≤0.5, 0≤d≤0.5, and 0≤e≤0.1); LiₐNiG_{b}O₂ (0.90≤a≤1.8 and 0.001≤b≤0.1); LiₐCoG_{b}O₂ (0.90≤a≤1.8 and 0.001≤b≤0.1); LiₐMn_{1-b}G_{b}O₂ (0.90≤a≤1.8 and 0.001≤b≤0.1); LiₐMn₂G_{b}O₄ (0.90≤a≤1.8 and 0.001≤b≤0.1); LiₐMn_{1-g}G_{g}PO₄ (0.90≤a≤1.8 and 0≤g≤0.5); Li_{(3-f)}Fe₂(PO₄)₃ (0≤f≤2); or LiₐFePO₄ (0.90≤a≤1.8).

In the above Chemical Formulas, A is or includes at least one of Ni, Co, Mn, or a combination thereof; X is or includes at least one of Al, Ni, Co, Mn, Cr, Fe, Mg, Sr, V, a rare earth element, or a combination thereof; D is or includes at least one of O, F, S, P, or a combination thereof; G is or includes at least one of Al, Cr, Mn, Fe, Mg, La, Ce, Sr, V, or a combination thereof; and L¹ is or includes at least one of Mn, Al, or a combination thereof.

The positive electrode active material may be or may include, for example, a high nickel-based positive electrode active material having a nickel amount greater than or equal to 80 mol%, greater than or equal to 85 mol%, greater than or equal to 90 mol%, greater than or equal to 91 mol%, or greater than or equal to 94 mol% and less than or equal to 99 mol% based on 100 mol% of the metal in the lithium transition metal composite oxide, excluding lithium. The high-nickel-based positive electrode active material may be capable of realizing high capacity and can be applied to a high-capacity, high-density rechargeable lithium battery.

An amount of the positive electrode active material may be in a range from ≥ 90 wt% to ≤ 99.5 wt% based on 100 wt% of the positive electrode active material layer. Amounts of the binder and the conductive material may be in a range from ≥ 0.5 wt% to ≤ 5 wt%, respectively, based on 100 wt% of the positive electrode active material layer.

The binder attaches the positive electrode active material particles to each other and also attaches the positive electrode active material to the current collector. Examples of the binder may include at least one of polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, or nylon as non-limiting examples.

The conductive material may impart conductivity (e.g., electrical conductivity) to the electrode. Any material that does not cause an undesirable chemical change in the rechargeable lithium battery and that conducts electrons can be used in the battery. Examples of the conductive material may include a carbon-based material such as at least one of natural graphite, artificial graphite, carbon black, acetylene black, ketjen black, a carbon fiber, a carbon nanofiber, and carbon nanotube; a metal-based material containing at least one of copper, nickel, aluminum, and silver in a form of a metal powder or a metal fiber; a conductive polymer such as a polyphenylene derivative; or a mixture thereof.

Al may be used as the current collector, but the current collector is not limited thereto.

The rechargeable lithium battery may further include an electrolyte solution.

The electrolyte solution for a rechargeable lithium battery may include a non-aqueous organic solvent and a lithium salt.

The non-aqueous organic solvent may constitute a medium for transmitting ions taking part in the electrochemical reaction of a battery.

The non-aqueous organic solvent may be or may include at least one of a carbonate-based, ester-based, ether-based, ketone-based, or alcohol-based solvent, an aprotic solvent, or a combination thereof.

The carbonate-based solvent may include at least one of dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), or butylene carbonate (BC).

The ester-based solvent may include at least one of methyl acetate, ethyl acetate, n-propyl acetate, dimethyl acetate, methyl propionate, ethyl propionate, decanolide, mevalonolactone, valerolactone, or caprolactone.

The ether-based solvent may include at least one of dibutyl ether, tetraglyme, diglyme, dimethoxyethane, 2-methyltetrahydrofuran, or 2,5-dimethyltetrahydrofuran, tetrahydrofuran. In addition, the ketone-based solvent may include cyclohexanone. The alcohol-based solvent may include ethanol or isopropyl alcohol. The aprotic solvent may include at least one of nitriles such as R-CN (wherein R is a C2 to C20 linear, branched, or cyclic hydrocarbon group, a double bond, an aromatic ring, or an ether bond); amides such as dimethylformamide; dioxolanes such as 1,3-dioxolane, or 1,4-dioxolane; or sulfolanes.

The non-aqueous organic solvents may be used alone or in combination of two or more solvents.

In addition, when using a carbonate-based solvent, a cyclic carbonate and a chain carbonate may be mixed together, and the cyclic carbonate and the chain carbonate may be mixed in a volume ratio ranging from about 1:1 to about 1:9.

The lithium salt dissolved in the organic solvent supplies lithium ions in a battery, enables an operation of a rechargeable lithium battery, and improves transportation of the lithium ions between positive and negative electrodes. Examples of the lithium salt include at least one of LiPF₆, LiBF₄, LiSbF₆, LiAsF₆, LiClO₄, LiAlO₂, LiAlCl₄, LiPO₂F₂, LiCl, LiI, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (wherein x and y are integers in a range from 1 to 20), lithium trifluoromethane sulfonate, lithium tetrafluoroethanesulfonate, lithium difluorobis(oxalato)phosphate (LiDFOB), and lithium bis(oxalato) borate (LiBOB).

The rechargeable lithium battery may further comprise a separator.

Depending on the type of rechargeable lithium battery, a separator may be present between the positive and negative electrodes. As such separators, polyethylene, polypropylene, polyvinylidene fluoride or multilayer films of two or more layers thereof may be used, and of course, mixed multilayer films such as a polyethylene/polypropylene two-layer separator, a polyethylene/polypropylene/polyethylene three-layer separator, or a polypropylene/polyethylene/polypropylene three-layer separator may be used.

The separator may include a porous substrate and a coating layer being disposed on one or both surfaces of the porous substrate and including an organic material, an inorganic material, or a combination thereof.

The above porous substrate may be a polymer film formed of any one polymer selected from polyolefins such as polyethylene and polypropylene, polyesters such as polyethylene terephthalate and polybutylene terephthalate, polyacetal, polyamide, polyimide, polycarbonate, polyether ketone, polyarylether ketone, polyetherimide, polyamideimide, polybenzimidazole, polyethersulfone, polyphenylene oxide, cyclic olefin copolymer, polyphenylene sulfide, polyethylene naphthalate, glass fiber, Teflon, and polytetrafluoroethylene, or a copolymer or mixture of two or more thereof.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present disclosure is not limited thereto.

The organic and inorganic materials may be present as a mixture in one coating layer or may be present in a form in which a coating layer including the organic material and a coating layer including the inorganic material are stacked.

### Rechargeable lithium battery

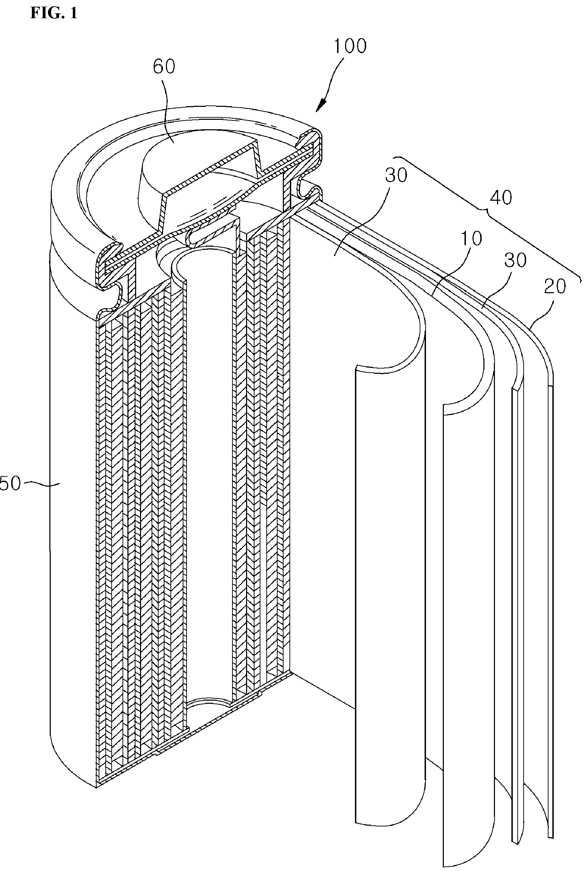

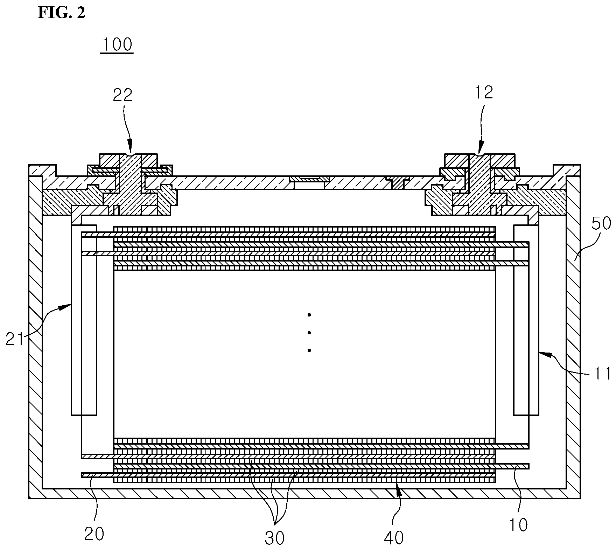

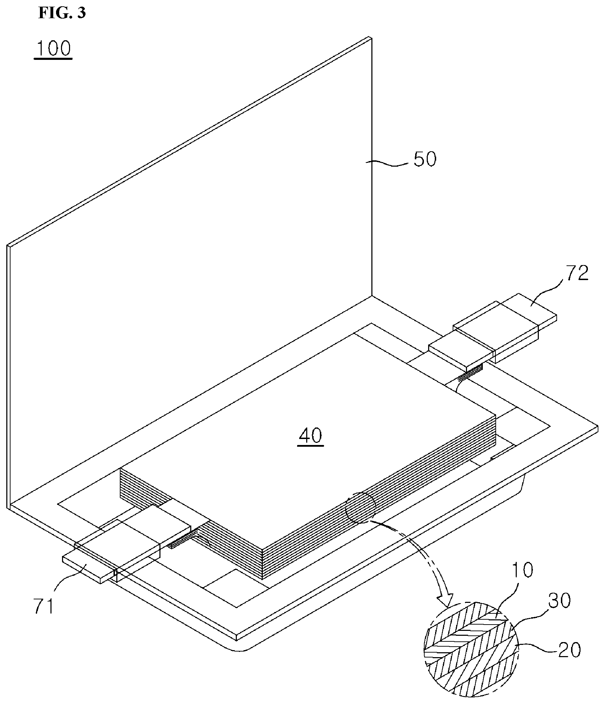

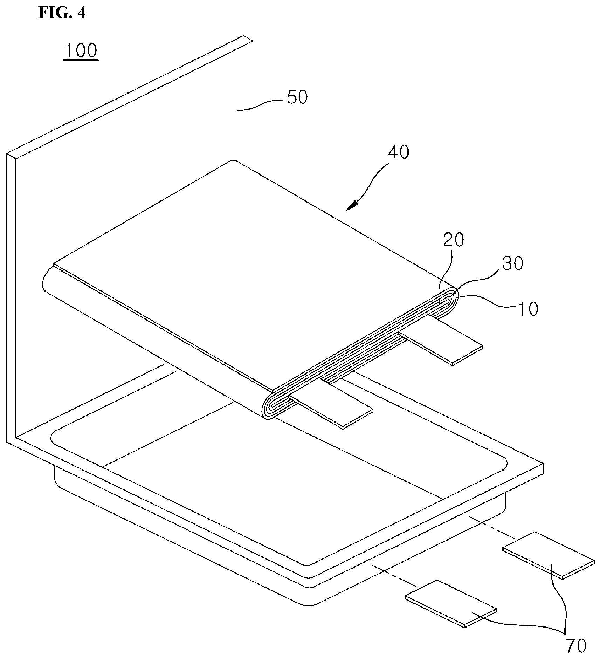

In some embodiments, the rechargeable lithium battery may be classified into cylindrical-, prismatic-, pouch-, or coin-type batteries depending on the geometry of the rechargeable lithium battery. FIGS. 1 to 4 are schematic diagrams showing rechargeable lithium batteries according to some embodiments of the present disclosure. Particularly, FIG. 1 illustrates a cylindrical battery, FIG. 2 illustrates a prismatic battery, and FIGS. 3 and 4 each illustrate a pouch-type battery. The rechargeable lithium battery 100 may include an electrode assembly 40 having a separator 30 interposed between a positive electrode 10 and a negative electrode 20, and a case 50 into which the electrode assembly 40 is built. The positive electrode 10, the negative electrode 20, and the separator 30 may be impregnated with an electrolyte (not shown). The rechargeable lithium battery 100 may include a sealer 60 configured to seal the case 50 as shown in FIG. 1. Also, in FIG. 2, the rechargeable lithium battery 100 may include a positive electrode lead tab 11, a positive electrode terminal 12, a negative electrode lead tab 21, and a negative electrode terminal 22. As in FIGS. 3 and 4, the rechargeable lithium battery 100 may include electrode tabs 70, i.e., a positive electrode tab 71 and a negative electrode tab 72, which serve as electrical paths configured to induct current generated in the electrode assembly 40 to the outside.

The rechargeable lithium battery according to one exemplary embodiment of the present disclosure may be applied to automobiles, mobile phones, and/or various types of electrical devices, but the present disclosure is not limited thereto.

Hereinafter, examples and comparative examples of the present disclosure will be described. However, the present disclosure is not limited to the examples and comparative examples.

### Example 1

A dispersion of silicon nanoparticles (primary silicon particles) was prepared by mixing silicon particles (average particle size D₅₀: approximately 1 µm) and isopropyl alcohol and milling the mixture in a bead mill with zirconium balls for 12 hours. The D₅₀ of the silicon nanoparticles is 90 nm. The prepared dispersion was spray-dried at 120°C to prepare secondary silicon particles in which the silicon nanoparticles were assembled. A mixture obtained by mixing the prepared secondary silicon particles and mesophase pitch in a weight ratio of 60:40 based on a total of 100 parts by weight was sprayed, dried using a spray dryer from about 50°C to about 150°C, pressed and molded under a pressure of 20 MPa for 3 minutes. The obtained pressed molded product was thermally treated in a N₂ atmosphere at 1000°C for 1 hour, thereby preparing a silicon-carbon composite.

90 parts by weight of the prepared silicon-carbon composite and 10 parts by weight of natural graphite with a D₅₀ of 10 nm were put into a hybridization system, Nara hybridization system, and then the hybridization system was operated, thereby preparing a negative electrode active material.

The prepared negative electrode active material includes a core containing silicon nanoparticles and amorphous carbon and natural graphite surrounding the core. The negative electrode active material has a weight ratio of the amount of the silicon nanoparticles and the amorphous carbon of 60:40 with respect to a total of 100 parts by weight of the silicon nanoparticles and the amorphous carbon. The average particle size D₅₀ is 6 µm, and the graphite is included at 10 wt% of the negative electrode active material.

### Example 2

A negative electrode active material and a battery were manufactured in the same manner as in Example 1, except that silicon nanoparticles were prepared to have a D₅₀ of 120 nm by changing the milling time in Example 1.

### Example 3

A negative electrode active material and a battery were manufactured in the same manner as in Example 1, except that 99.9 parts by weight of the silicon-carbon composite prepared in Example 1 and 0.1 parts by weight of natural graphite with a D₅₀ of 10 nm were used.

### Comparative Example 1

A negative electrode active material was prepared in the same manner as in Example 1, except that graphite was not used in the process of preparing a negative electrode active material.

### Comparative Example 2

A negative electrode active material was prepared in the same manner as in Example 1, except that graphite was not used and silicon nanoparticles were prepared to have a D₅₀ of 120 nm in the process of preparing a negative electrode active material.

### Comparative Example 3

A negative electrode active material was prepared in the same manner as in Example 1, except that 99.95 parts by weight of a silicon-carbon composite and 0.05 parts by weight of graphite with a D₅₀ of 10 nm were used.

### Experimental Example 1: Evaluation of negative electrode active material

### Confirmation of presence or absence of graphite in negative electrode active material:

X-ray diffraction (XRD) analysis was performed on the negative electrode active materials of the examples and comparative examples above. The XRD analysis was performed using Cu-Ka radiation in the range of 20 = 10° to 80°, under measurement conditions including a scan speed (°/S) of 0.054, a step size (°/step) of 0.01313, and time/step of 62.475 s. When a graphite-containing sample was analyzed by XRD analysis, the characteristic peak of graphite corresponding to the (002) plane appeared strongly at 26.5°, confirming whether the graphite was present or absent.

### Specific surface area (units: m²/g) of negative electrode active material

BJH measurement was performed using a BJH (model name: ASAP 2460, manufacturer: Micromeritics) analysis instrument, by measuring the amount of adsorption and desorption of a sample corresponding to the changes in pressure using nitrogen at the liquid nitrogen temperature (-198°C) from 0 mHg to 950 mmHg.

### Average particle size (D₅₀; units: nm) of silicon nanoparticles of negative electrode active material

Sizes of silicon nanoparticles were measured using a particle size analyzer (LS 13 320, Beckman Coulter). To analyze silicon nanoparticles, ethanol was used as a solvent, and to prevent the aggregation of the particles, the particles were pre-treated with ultrasonic waves.

### Sphericity of negative electrode active material

A sphericity was measured on a negative electrode active material using a Morphologi 4 device (Malvern). For the prepared negative electrode active materials of the examples and comparative examples, A and B values in Equation 1 were obtained and then the sphericity was calculated by Equation 1.

### Experimental Example 2: Evaluation of cell characteristics Manufacture of half-cell

A negative electrode active material slurry was prepared by mixing 97.5 wt% of the prepared negative electrode active material, and 2.5 wt% of styrene-butadiene rubber (SBR) as a binder in distilled water. A negative electrode was prepared by coating a copper foil with the negative electrode active material slurry, drying it, and then rolling the resulting foil. A half-cell was manufactured using the negative electrode, a lithium metal counter electrode, and an electrolyte. The electrolyte was a mixed solvent of ethylene carbonate and dimethyl carbonate (3:7 volume ratio) in which 1M LiPF₆ was dissolved.

### Efficiency (units: %)

The half-cell that was manufactured was subjected to one cycle of 0.2C constant current (CC)/constant voltage (CV) charging and 0.2C discharging, one cycle of 0.5C CC charging and 0.2C discharging, one cycle of 1C CC charging and 0.2C discharging, and one cycle of 2C CC charging and 0.2C discharging. The charging characteristics were then evaluated. Charging was conducted in the CC mode with a voltage cutoff of 10 mV and in the CV mode with a cutoff time of 15 hours , while discharging was carried out with a voltage cutoff of 1.5 V. The charging characteristics were measured at each C-rate. The resulting charging characteristics were calculated and presented as the ratio of the 2C CC charge capacity to the 0.2C CC charge capacity.

### Direct current internal resistance (DC-IR, units: Ω)

The half-cell that was manufactured was subjected to one charge/discharge cycle at 25°C under the following conditions: charging under CC-CV mode at 0.2C using cutoff criteria of 10 mV and 0.01C, followed by resting for 10 minutes; discharging with CC mode at 0.2C with a cutoff voltage of 1.5 V; and resting for 10 minutes. Afterward, at SOC50 (when the total charge capacity of a cell is considered 100%, it means the cell is charged to 50% of its capacity, which means that, in the state of discharge, the cell is discharged by 50%), a 3C current was applied for 1 second, and the resulting voltage drop (V) was measured. A resistance value was calculated from the measured voltage and the applied current (3C), and the result was expressed as direct current internal resistance (DC-IR).

### Volume expansion rate (units: %)

A volume expansion rate was measured using a thickness monitoring system (TMS). The half-cell that was manufactured was tested at 45°C at 0.5C/0.5C with charge and discharge voltages of 4.35 V and 2.8 V, respectively, while the cell thickness was monitored in real time to evaluate an increase rate between the 1^{st} and 50^{th} cycles. The equation for the volume expansion rate is represented below: 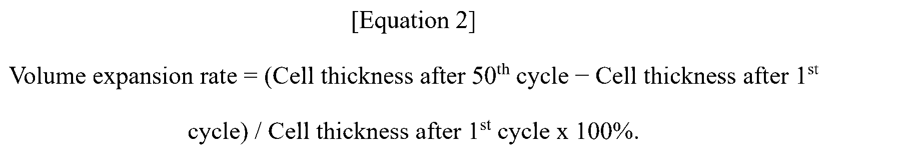 [Equation 2] Volume expansion rate = (Cell thickness after 50th cycle - Cell thickness after 1st cycle) / Cell thickness after 1st cycle x 100%.

**Table 1:**

| | Example | | | Comparative Example | | |
|---|---|---|---|---|---|---|
| | 1 | 2 | 3 | 1 | 2 | 3 |
| Amount of graphite | 10 | 10 | 0.1 | - | - | 0.05 |
| Specific surface area | 2.8 | 3.1 | 2.9 | 3.2 | 2.9 | 3.3 |
| D₅₀ of silicon nanoparticles | 90 | 120 | 90 | 90 | 120 | 90 |
| Sphericity | 0.90 | 0.91 | 0.90 | 0.92 | 0.91 | 0.92 |
| Efficiency | 91 | 91.5 | 91 | 88 | 89 | 88 |
| Volume expansion rate | 12.3 | 13.7 | 16.0 | 16.7 | 17.2 | 16.0 |
| DC-IR | 2.9 | 3.2 | 3.8 | 4.0 | 4.2 | 3.9 |

As shown in Table 1, the negative electrode active material for a rechargeable lithium battery according to Examples 1-3 may have less volume expansion during charging and discharging of a battery, and may increase the capacity, efficiency and lifespan of a rechargeable lithium battery.

Although some embodiments of the present disclosure have been described above, the present disclosure is not limited thereto, and one skilled in the art may implement various modifications to the embodiments of the present disclosure while maintaining the spirit of the disclosure conveyed by the description, drawings, and claims herein.

## Claims

1. A negative electrode active material for a rechargeable lithium battery (100), the negative electrode active material comprising:
a silicon-carbon composite comprising:
silicon nanoparticles; and
amorphous carbon; and
graphite on a surface of the silicon-carbon composite;
wherein an amount of the graphite in the negative electrode active material is from ≥ 0.1 wt% to ≤ 10 wt%, and
wherein a specific surface area of the negative electrode active material is ≤ 10 m²/g or less.

2. The negative electrode active material of claim 1, wherein the graphite surrounds the silicon-carbon composite.

3. The negative electrode active material of claim 1 or 2, the negative electrode active material further comprising:
a core consisting of the silicon-carbon composite; and
a shell that surrounds the core and contains the graphite.

4. The negative electrode active material according to any one of claims 1 to 3, wherein the graphite is contained from ≥ 0.1 parts by weight to ≤ 20 parts by weight with respect to 100 parts by weight of the silicon nanoparticles.

5. The negative electrode active material according to any one of claims 1 to 4, wherein the graphite is chemically bound to the silicon-carbon composite.

6. The negative electrode active material according to any one of claims 1 to 5, wherein the graphite has an average particle size D₅₀ of ≤ 5 µm or less.

7. The negative electrode active material according to any one of claims 1 to 6, wherein the graphite comprises natural graphite or artificial graphite.

8. The negative electrode active material according to any one of claims 1 to 7, wherein an amorphous carbon is present on the surface of the silicon-carbon composite.

9. The negative electrode active material according to any one of claims 1 to 8, wherein the silicon nanoparticles are spherical or flaky.

10. The negative electrode active material according to any one of claims 1 to 9, wherein the silicon nanoparticles have an average particle size D₅₀ from ≥ 50 nm to ≤ 150 nm.

11. The negative electrode active material according to any one of claims 1 to 10, wherein the negative electrode active material comprises the silicon nanoparticles in an amount from ≥ 20 wt% to ≤ 70 wt% of a total weight of the negative electrode active material, and
wherein the negative electrode active material comprises the amorphous carbon from ≥ 20 wt% to ≤ 70 wt% of a total weight of the negative electrode active material.

12. The negative electrode active material according to any one of claims 1 to 11, wherein the silicon nanoparticles are primary particles, and
wherein the negative electrode active material contains secondary particles in which the silicon nanoparticles are assembled; and preferably wherein the amorphous carbon surrounds the secondary particles or completely fills an inter-particle spacing between the primary particles.

13. The negative electrode active material according to any one of claims 1 to 12, wherein the negative electrode active material has an average particle size D₅₀ of ≤ 15 µm or less.

14. The negative electrode active material according to any one of claims 1 to 13, wherein the negative electrode active material has a sphericity of ≥ 0.8 or more.

15. A rechargeable lithium battery (100) comprising:
a negative electrode (20) comprising the negative electrode active material of claims 1 to 14; and
a positive electrode (10).
